# EUROPEAN PATENT SPECIFICATION

(11) **EP 3 053 490 B1**
(45) Date of publication and mention of the grant of the patent: **06.09.2017**
(21) Application number: 15153838.6
(22) Date of filing: 04.02.2015
(51) Int. Cl.: A47J 31/36, A47J 31/06

(54) **Brewing unit for a beverage dispensing machine**
Brüheinheit für eine Getränkeausgabevorrichtung
Unité d'infusion pour une machine de distribution de boisson

(43) Date of publication of application: 10.08.2016
(73) Proprietor: Tuttoespresso S.r.l., 20121 Milano (IT)
(72) Inventor: Doglioni Majer, Luca, 20121 Milano MI (IT)
(74) Representative: Gislon, Gabriele

(56) References cited:
- EP-A1- 2 229 848
- WO-A1-2013/098096
- ES-A1- 2 156 668

## Description

### Field of the Invention

The present invention relates to a brewing unit intended to be used in dispensing machines aimed for drinks preparation and in general for beverages preparation.

Preferably it applies to a brewing mechanism of a dispensing machine designed to prepare single- or multi-serve drinks based from soluble ingredients, such as de-hydrated chocolate mixes, cappuccino pre-mixes, concentrates and, more preferably, from fresh ingredients appropriately ground or minced, such as coffee, herbal infusions, teas et similia. The foodstuff may be provided in the chamber in the form of a pre-filled single-serve container e.g. a "coffee capsule" or a "paper pod" or in raw loose form, i.e. unpackaged.

In the following reference will be made to a "dose of ingredient" to cover both above mentioned possibilities; a preferred use is with unpackaged foodstuff and in particular with ground coffee. In the following description reference will be made to coffee to cover coffee and also all possible ingredients.

Preferably this Application also applies to a brewing unit aimed at being utilised in a dispensing machine of the type so-called "fully automatic" i.e. machines where the sequence of steps needed, from a stand-by situation, to process the foodstuffs to be used for the preparation of the drink are performed automatically "at the push of a button"; such prepared drinks may be hot drinks as well as drinks to be served at ambient temperature or as chilled drinks.

### Background Art

Several brewing units are known in the art for preparing coffee, teas and other drinks in a fully automatic manner. Nevertheless there are several drawbacks in the current Art. The present Application aims to solve these drawbacks by introducing several improvements which will be clarified in the course of the description.

It is known that in certain "super-automatic" machines the coffee is ground on demand of the user, and the brewing unit is automatically fed e.g. with coffee grounds milled just before being fed to the chamber. In order to achieve this, though, it is necessary for the coffee to be properly directed i.e. channeled by a funnel or connecting portion placed between the coffee grinder's outlet and the brewing (or "preparation") chamber of the brewing unit.

To provide an even distribution in the chamber of the coffee grounds throughafter this channeling action is a complex accomplishment. In fact, for brewing to be performed, usually at a positive pressure between 1 and 20 bars, the chamber has, after the coffee-filling step, to be closed and sealed by a piston. Therefore access to the chamber from above cannot be encumbered, for instance by a funnel, for such step to be properly performed. In order to overcome such issue, it is known in the art to position the funnel laterally to the closing piston to avoid to rotate the chamber in order to get it from a coffee loading position to a brewing position, i.e. when the chamber is closed by the piston. In such case one drawback of the current Art is that the funnel is slanted. That is that the funnel is inclined to provide a connection between the axially-displaced centers of the grinder's outlet and the brewing chamber. In such a way, to be more clear, a non simmetric or displaced coffee grounds' throw-patterns in the chamber will occur. It is known that asymmetric throw patterns may generate uneven compression of the coffee cake and therefore lower extraction yields.

Moreover the spent coffee cake (exhausted ingredient) needs to be disposed of, after the drink preparation cycle, and this requires the coffee funnel to stay clear from the area involved with ejecting the cake. For instance, the funnel may be movable between at least two positions, which complicates the unit's design.

Furthermore, when the spent-coffee cake is disposed, in case the dispensing cycle concerns e.g. a traditional hot coffee or tea, such cake has a temperature between 80°C. and 90°C. and generates steam. A second drawback is therefore known when there is close proximity between coffee funnel and steam from the coffee cake and the brewing chamber. In this case the funnel will get wet and the ground coffee powder will stick to it, thus hindered from properly discharging into the brewing chamber. Indeed, whenever build-ups of coffee are created in the funnel due to the humidity and the water droplets accumulating on the funnel, chunks of agglomerated coffee grounds may randomly fall in the chamber, thus providing erratic coffee volumes in the chamber and, ultimately, lower drink-quality in the cup. Another drawback of the current Art is related to the overall dimensions of the brewing unit. Because of the number of steps needed by the brewing unit - from a stand-by position - to prepare a drink and - from a drink preparation position - to return to a stand-by position, several solutions have been developed. In EP1774881 to Niro Plan one such brewing unit, using two parallel screws to drive the brewer chamber, is described; but to perform the brewing cycle it is required a relevant linear displacements of the brewing chamber. The present Application aims at providing a solution to reduce the overall dimensions of the brewing unit, and providing lesser excursion to the brewing chamber in order to complete one brew cycle, as well as - *ceteris paribus -* a shorter cycle-time and in general a higher quality to the user. The present Application aims at improving a further drawback of Prior Art by providing a more accurate control of the brewing parameters. It is known (e.g. WO2008074421 to Trio) that drinks dispensers usually rely on hydraulic solutions to generate different volumes within the brewing chamber. Since these cannot be modulated during the brew cycle, and the parameters under control are limited, it is impossible to customise drink cycles according to the needs of each beverage, therefore breadth of drinks range and in general their quality.

A further aim of the present invention is to provide a drinks system providing broader spectrum of drinks for the end-user via utilising a dispensing apparatus equipped with the claimed brewing unit and at least two heaters, to provide two separate, mixable liquid sources with at least one dispensing temperature.

Further drawback of currently available brewing units is that these are equipped with chambers provided with a loading position of coffee-grounds in an upper position, and the discharging of the spent cake in a lower position; the terms "upper" and "lower", in this context, should be considered relative to the supporting base of the dispensing apparatus. Such solutions for the loading and discharging positions provide, in general, for a bigger, taller dispensing machine. In detail, since a) the volume occupied by the grinding unit will lay wholly above the grounds-loading point in the brewing unit; and, meanwhile, b) an appropriately sized spent coffee-cake basket to accommodate a convenient amount of coffee-cakes requires a certain height, and such basket cannot be placed but below the ejecting point from the brewer. These two aspects or limitations determine a less compact unit. Some solutions have been provided by the current Art to overcome such issue. For instance a rotating chamber has been designed, such as in EP0452215 to Courtois. Or pivoting chambers, such as in FR2409032 to A.D.M. or IT1241863 to Ferrante and Della Borra, or EP0913111 to Dal Tio, or EP-A1-2 229 848, or ES-A1-2 156 668, which discloses the preamble of claim 1. Regrettably, in all these mentioned cases the complexity of their constructions is such that these solutions are expensive and relatively troublesome for use in a commercial environment.

Therefore, a further aim of the present Application is to provide an improvement to the present Art with a brewing unit minimising the height of the discharge point of the coffee grounds from the grinder and the brewing chamber, in order to lower the height of the whole dispensing unit by lowering the coffee-grounds loading position i.e. the grinder outlet's. At the same time the novel unit claimed by the present Application allows for raising the height of the spent-coffee cake disposal point to increase storing space for spent-coffee cakes and promote efficient use of space.

Another advantage of the present Application is towards the current art utilising, such as in WO201013274 to Rossi, a locking pawl to command the lifting of the lower filter. In this cited case, the mechanism is cumbersome and designed to move also the upper filter, making more complex the brewing assembly with additional potential alignment issues between the two filters and the need of providing a moving water connection to the chamber.

The teachings of this patent are applicable regardless to whether the diluent's stream is designed to flow downward or upward the preparation chamber.

### Summary of the invention

The above mentioned problems are solved by the present invention that provides a brewing unit according to claim 1 and a brewing method according to claim 12. A further embodiment of the invention is provided by the brewing unit according to claim 14. Another object of the invention is a beverage preparing machine including a brewing unit according to claim 1. Preferred embodiments are defined in the dependent claims.

In a first exemplary embodiment, the brewing unit of the invention has a brewing chamber that rotates, i.e. is moved along an arch of circumference from a coffee loading position to a brewing position and back to the loading position; during the rotation the chamber is also displaced, preferably along a translation axis, to engage the closing element. Internally to the chamber is provided a mobile piston having a stem extending through the bottom wall of the chamber; the piston carries a filter.

According to said first embodiment of the invention, the brewing unit comprises a first element, for example a rod, rotatably constrained to the brewing chamber at a first rotation axis and a second element, for example a rod, rotatably constrained to the piston at a second rotation axis, said first and second elements (e.g. rods) being rotatably constrained one to another by a connecting portion at a third rotation axis; the relative position between the first rotation axis and the second rotation axis as well as the position of the piston with respect to the brewing chamber is controlled and modified by operating means that engage the two elements, preferably at their connecting portion and the piston stem.

The operating means are preferably separate means: first operating means act on the two rods to increase the distance between the first and second rotation axis, so as to move the piston in a position in which the filter is adjacent to the bottom wall of the brewing chamber and the piston's stem is almost fully protruding outside the lower wall of the chamber. This is the configuration of the brewing chamber that is provided e.g. in the loading position and in the brewing position of a cycle of the brewing unit. In a preferred embodiment, the first operating means is a guiding surface that engages the connection portion of the two elements connecting the brewing chamber to the piston (e.g. rods) to move it, i.e. to push it, towards the brewing chamber; by this action, the angle between the two elements (rods) is increased so that the first and second axis are pushed away from each other and the distance between them is increased.

The second operating means acts on the piston to decrease the distance between said first and second rotation axis; in greater detail the second operating means push the piston into the chamber until the filter of the piston reaches a position in which it is aligned or substantially aligned with the upper edge (open side) of the brewing chamber. This is the configuration of the brewing chamber that is provided in the position of discharging the spent coffee cake after brewing the beverage.

In a preferred embodiment the second operating means is a lever that is normally biased into a position that is incident with the path to be followed by the piston's stem during rotation of the chamber from the brewing position to the loading position. The rotation of the chamber is also linked to the shape of the lever in the area of contact with the stem of the piston: after being pushed into the chamber, the stem's end contacting the lever is guided around the edge of the lever until it slides or moves laterally to the lever. At this point the stem of the piston moves the lever into an inoperative position in which the lever is not incident to the movement path of the piston and the piston can be moved again by the two elements (rods) in the configuration to be used in the loading position. As mentioned, the invention relates to a brewing chamber that is rotatable about a rotation axis located outside the volume of the brewing chamber intended to house the ingredient; in a preferred embodiment, the rotation axis of the brewing chamber is arranged below the plane defined by the bottom surface of the brewing chamber, i.e. below the bottom wall of the chamber, below the wall from which the piston stem protrudes.

This is a dramatic difference with respect to the prior art embodiments, where the chamber itself is pivotably linked to the supporting elements of the brewing unit.

A further embodiment of the present invention relates to a brewing unit for a beverage dispensing machine according to claim 14, wherein the brewing chamber is rotatable about a rotation axis arranged outside the volume of the brewing chamber intended to house the ingredient.

Preferably, the brewing chamber is also movable along a translation axis. In other words the movement of the brewing chamber can be a roto-translation movement.

A further aspect of the invention is the fact that the chamber receives the coffee in a loading position that is inclined with respect to the vertical axis of the unit and that the chamber is moved to a brewing position that is also inclined with respect to said vertical axis but is on the opposite inclination side. The preferred inclination angles are recited in the claims.

A further object of the present invention relates to a brewing unit for a beverage dispensing machine comprising a brewing chamber and a closing element, wherein the brewing chamber is movable between a loading position in which is disengaged from the closing element to receive an ingredient through an opening of the brewing chamber and a brewing position in which the brewing chamber engages the closing element, driving means for moving the brewing chamber from said loading position to said brewing position and viceversa.

The brewing chamber in both said loading position and in said brewing position is inclined with respect to a vertical axis of the brewing unit,

According to a possible embodiment, the brewing chamber has a brewing chamber axis and in said loading position and in said brewing position the brewing chamber axis is inclined with respect to a vertical axis of the brewing unit.

Preferably, the inclination of the brewing chamber, and in particular of the brewing chamber axis, in the loading position is opposite to the inclination in the brewing position.

It is an aspect of the invention that the movement of the brewing chamber from one angle to the other, opposite side, angle provides a substantial levelling of the coffee powder inside the chamber.

Thanks to the above mentioned features the brewing unit of the invention can solve the previously mentioned problems in a simple and practical way, providing a compact brewing unit with a simple but dramatically efficient construction. It has to be noted that features disclosed in the dependent claims and/or in the present description can be applied to a brewing unit (for example according to different objects of the invention) either separately or in combination.

### Brief Description of the Drawings

Further advantages and features of the present invention will be more apparent from the description below, provided with reference to the accompanying drawings, purely by way of a non-limiting example, wherein:
- Figure 1 is a schematic section view of a possible embodiment of the brewing unit according to the present invention, wherein the brewing chamber is in the loading position of an ingredient;
- Figure 2 and 3 are schematic section views of a possible embodiment of the brewing unit according to the present invention, wherein the brewing chamber is shown in two positions during the movement from the loading position to the brewing position;
- Figure 4 is a schematic section view of a possible embodiment of the brewing unit according to the present invention, wherein the brewing chamber is in the brewing position wherein it engages the enclosing element;
- Figures 5 to 9 are schematic section views of a possible embodiment of the brewing unit according to the present invention, wherein the brewing chamber is shown in five positions during the movement from the brewing position to loading brewing position and wherein in figures 5, 6, 7 and 8 the piston is moved towards the extended position (figure 8) to eject the exhausted ingredient outside the brewing chamber and in figure 9 the piston is moved backward in the retracted position;
- Figures 10a and 10b are schematic perspective views of a possible embodiment of the brewing unit according to the invention;
- Figure 10c is an exploded view of a possible embodiment of the brewing unit according to the invention;
- Figure 10d is a detailed exploded view of a possible embodiment of the brewing chamber according to the invention;
- Figure 11 is a lateral detailed view of a possible embodiment of the brewing chamber according to the invention.

### Detailed Description of the invention

With reference to the exemplary and not limitative figures herewith attached, a possible embodiment of the brewing unit according to the invention will be disclosed.

The brewing unit 1 according to the invention may be used with fresh ingredients such as coffee, tea, herbal infusions, concentrates and dried powders.

In other words, the term "ingredient" will be used herein to indicate not only coffee, and in particular powder coffee, but also other ingredients (foodstuffs) which can be used for the beverage preparation.

It has to be also noted that the use of words such as "exhausted ingredient", "coffee-cake" or "spent-coffee" cake is exemplary for spent ingredients (spent foodstuffs material), i.e. ingredients that are used for a drink preparation cycle, and - in such process - exhausted.

For clarity's sake, such wording has to be understood as not merely limited and referred to coffee, but also comprising and referring to other drinks preparations involving ingredients such as those used for herbal infusions, green teas, white teas, etc.

The brewing unit 1 is intended to be installed into a beverage dispensing machine, not shown, of the known type for use for example in foodservice, vending, Office Coffee Service and other out-of-home uses as well as for use at home.

Advantageously, the brewing unit 1 can be realized to be easily removable from the beverage dispensing machine in which it is installed, to carry out the maintenance operations, or if needed, to change the brewing unit.

These dispensing machines would typically have a diluent source (usually water) derived from e.g. a mains water hook-up or a water tank, an hydraulic circuit including valves and hydraulically connecting, preferably in a serial manner, a volumetric control for the incoming fluid, a pump, heating means to raise the temperature of the diluent to the desired operating temperature, sealing means appropriately designed to allow for pressures up to 20 bars to be safely maintained during the drink preparation cycle.

A micro-processor equipped controller (control unit) manages the different machine functions, with inputs by the end user obtained for example via a GUI such as the one in US8777103 by the Applicant. The apparatus may include a tag reader or emitter, to be connected with internal operative modules or externally-sourced tasks, such as in EP1626375 by the Applicant. According to a possible embodiment, the brewing unit 1 is installed into a beverage dispensing machine comprising heating means for a diluent. The heating means can comprises "traditional heater" such as for example a boiler, e.g. of the type comprising a vessel for the diluent liquid wherein the liquid is heated by electric resistances; alternatively or in conjunctions with the aforementioned heaters also flash heaters and induction heaters may be used. The heating means may in fact comprise, instead of or in combination with, traditional heaters, "pipe heaters", also called "speed heaters" or "heating films", which can either be thick films, or preferably thin films. These heating means can be obtained by coating or sealing heating means to a diluent conducting pipe, such as described in pending patent application PCT/EP2014/079033 by the Applicant.

Heating films are known in the art and may be preferably composed of coatings made of chemical compounds including different electrically conductive materials, such as metal oxydes, or carbon based material (including the so-called CNT, i.e. carbon nanotube). The heating means can be connected to a hydraulic circuit which can be maintained under pressures between 1 and 20 bars, preferably between 5 and 17 bars.

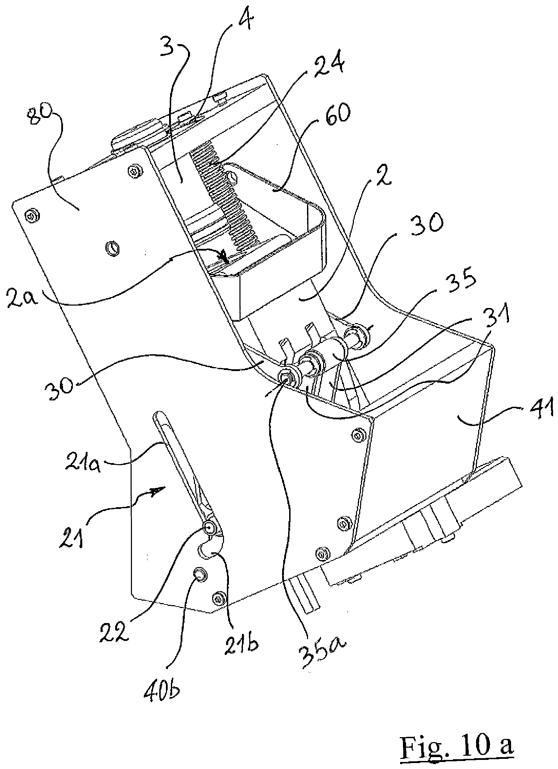

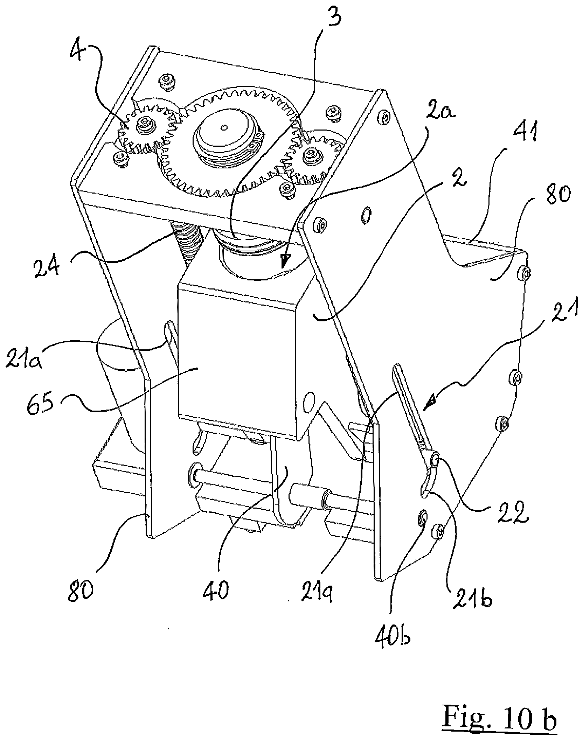

The brewing unit 1 may comprise a frame 80, schematically shown in figures 10a, 10b, to support the components of the brewing unit with its electrically operated parts, hydraulic connections and fittings (both upstream and downstream the brewing unit).

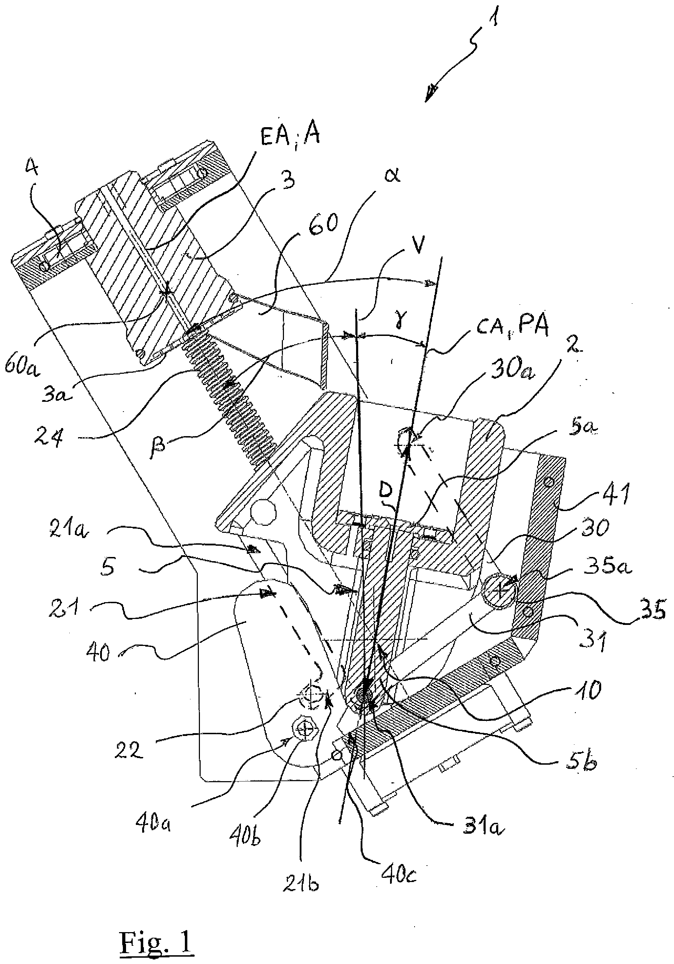

The brewing unit 1 for a beverage dispensing machine comprises a brewing chamber 2 and a closing element 3. The brewing chamber is movable between a loading position and a brewing position. In the loading position (shown in figure 1) the brewing chamber 2 is disengaged from the closing element 3 and an ingredient is loaded into the brewing chamber through at least one opening 2a of said brewing chamber.

In other words, in the loading position a dose of an ingredient, such as coffee powder, is supplied to the brewing chamber by the opening 2a.

According to a possible embodiment, the ingredient is supplied from a container, where it is stored, preferably by gravity to the brewing chamber arranged below the ingredient container.

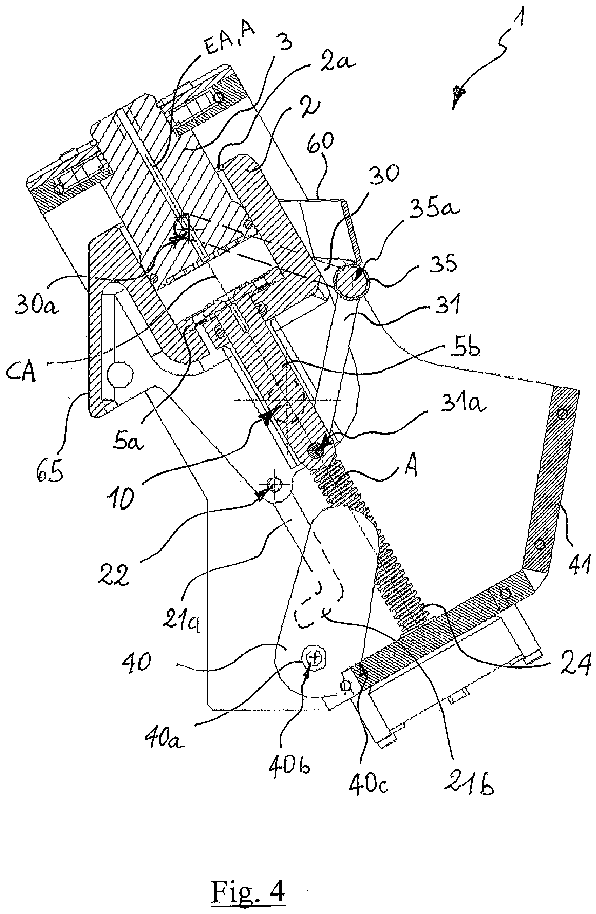

In the brewing position, as for example shown in figure 4, the brewing chamber 2 engages the closing element 3, and in particular the closing element 3 is arranged in correspondence of the opening 2a of the closing chamber, or arranged at least in part in the brewing chamber 2 by passing through the opening 2a.

It has to be noted that different brewing positions can be defined depending on the relative position between the closing element 3 and the brewing chamber 2. In fact, in the brewing position the closing element 3 can be arranged in correspondence of the opening 2a, or in inside the brewing chamber 2. By doing so, different volumes can be defined inside the brewing chamber 2 in the brewing position, for example depending on the beverage to be prepared and/or depending on the quantity of ingredient arranged therein.

As mentioned above, the brewing chamber 2 is provided with an opening 2a for the insertion/ejection of the ingredient. The brewing chamber 2 is also provided with a lateral surface 2c and a bottom surface 2b.

The brewing chamber 2 is provided with an axis CA, preferably a central axis CA. The brewing chamber axis CA is preferably coincident to a closing element axis EA when the brewing chamber is in the brewing position.

As it will be disclosed later in greater detail, according to a possible embodiment of the brewing chamber axis CA is inclined with respect to the closing element axis EA when the brewing chamber is in the loading position.

According to a possible embodiment, the brewing chamber has a substantially cylindrical shape and the brewing chamber axis CA corresponds to the axis of the cylinder defining the shape of the brewing chamber.

The brewing chamber 2 is provided with a diluent's inlet and an outlet for the prepared beverage. These can either follow a gravity-like path, with the inlet on a higher level than the outlet, or viceversa an anti-gravity path, i.e. bearing the outlet on the upper side and the inlet below it, on the lower side. The inlet points for the diluent preferably will provided on a filter portion (3a, 2a) of either closing element 3 or of the brewing chamber 2.

The closing element 3 is shaped so as to cooperate with the brewing chamber 2 to form a volume wherein the ingredient can be brewed by a supplied diluent.

As known in the art, the closing element 3 has preferably a complementary shape to that of the brewing chamber 2.

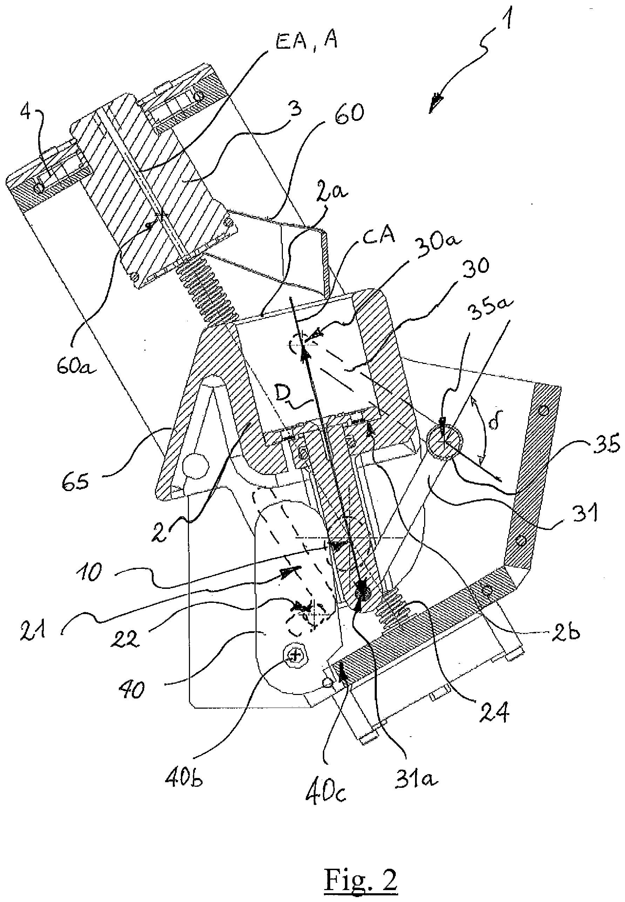

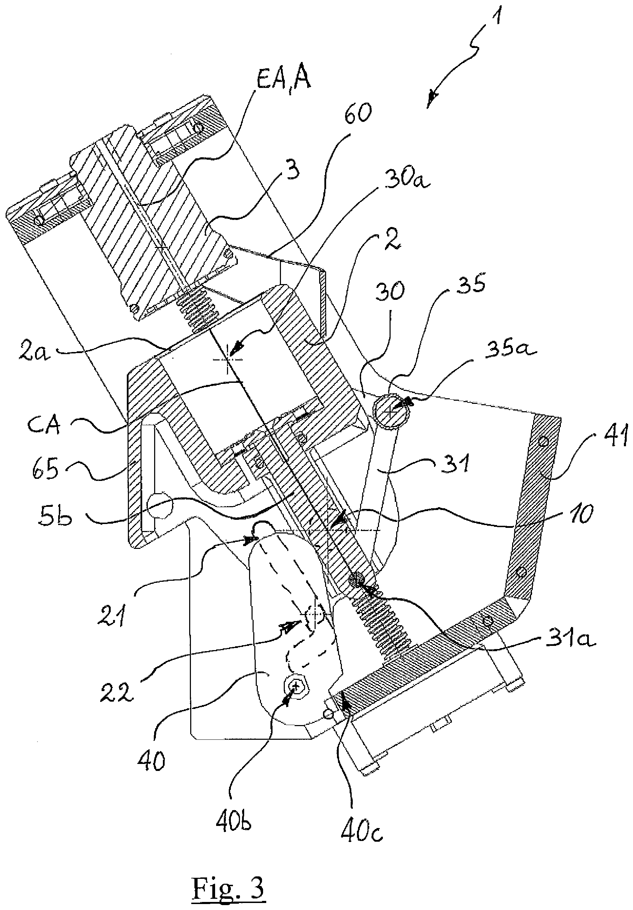

The closing element 3 may comprise at least one sealing element, e.g. a sealing ring, as for example shown in the figures 1 - 9. The sealing element of the closing element 3 can be arranged on the external surface of the closing element, as for example shown in the figures 1 - 9.

The closing element 3 comprises a filter portion 3a, preferably formed by a plurality of passages for the diluent liquid.

The closing member 3 may be either fixed or linearly displaceable, in which case the distance covered by such displacement correspond to a percentage of the maximum linear displacement of the brewing chamber 2, as disclosed in greater detail below, during a complete brewing cycle. Preferably said percentage is not higher than 20%, more preferably not higher than 10% and most preferably not higher than 8%.

Movement of the closing element 3 may be utilized for controlling or cooperating to discharging of compressed gases or of liquids under pressure, crema-valves, cut-off valves, spring-loaded or hydraulically-or electrically-controlled cake-compression systems, and other uses available to the art. The brewing unit 1 further comprises a piston 5 having a filter portion 5a arranged inside the brewing chamber 2 and a stem portion 5b protruding outside the brewing chamber 2.

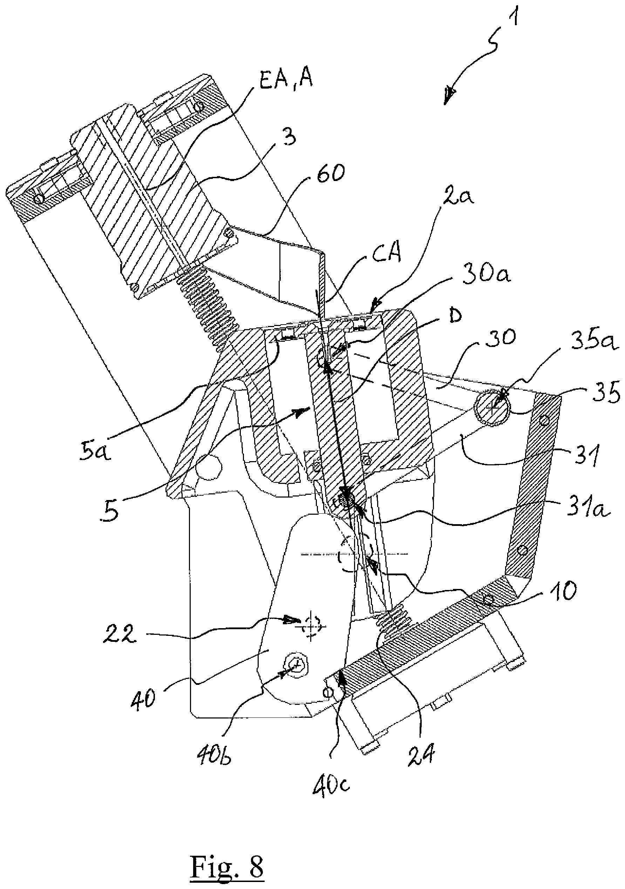

The piston 5, and thus the filter portion 5a, is movable with respect to the brewing chamber 2 between a retracted position (see for example figure 1) and an extended position (see for example figure 8) for the ejection of the exhausted ingredient outside said brewing chamber.

More in detail, in the retracted position the filter portion 5a of the piston 5 is preferably arranged in correspondence of, or close to, the bottom surface 2b of the brewing chamber and in the extended position the filter portion 5a is arranged in correspondence of, or close to, the opening surface 2a of the brewing chamber 2.

The movement of the piston 5, and thus of the filter portion 5a and of the stem portion 5b, is preferably a linear movement, i.e. a movement along an axis. According to a possible embodiment the movement of the piston 5 is carried out along the brewing chamber axis CA, or along a direction parallel to the brewing chamber axis CA.

According to a possible embodiment, the piston 5 and in particular its stem portion 5b, comprises a longitudinal piston axis PA. The piston axis is preferably arranged coincident with the brewing chamber axis CA, as for example shown in the figures.

However, according to different possible embodiment, the longitudinal piston axis PA can be not coincident with the brewing chamber axis CA, and preferably arranged parallel to the brewing chamber axis CA.

As mentioned above, the filter portion 5a lodged in the brewing chamber, is displaceable in relation to the brewing chamber. It has to be noted that the interface with the brewing chamber shall allow, following teachings available to the skilled in the art, air-tight sealing connection for the filter portion 5a to withstand pressures up to 20 bars.

In general, a sealing element, e.g. a sealing ring, can be provided to avoid liquid leakage during the movement of the piston 5 with respect to the brewing chamber 2.

As it will be disclosed later in greater detail, the movement of the piston 5 and thus of the filter portion 5a, with respect to the brewing chamber 2 allows to move the piston from the retracted position to the extended position, and viceversa from extended to retracted positions, as a function of the position of the brewing chamber 2 between the loading position and the brewing position.

It has to be noted that the diluent liquid can be supplied in the brewing chamber 2 either by the closing element 3, for example by the filter portion 3a, or by the brewing chamber itself, for example by passing through the filter portion 5a of the piston 5. More in detail, the filter portion 3a of the closing element 3 may feed diluent liquid (e.g. water) to the brewing chamber and the filter portion 5a of the piston 5 appropriately filter the drink (prepared beverage) out from the exhausted ingredient (e.g. coffee-grounds), or viceversa.

According to a possible embodiment, the movement of the brewing chamber is a roto-translation movement, e.g. a movement having at least a translation component and a rotation component.

In other words, according to a possible embodiment, as for example shown in the figures, the brewing chamber is translated along a translation axis A and rotated to be inclined with respect to said translation axis A. The brewing chamber 2 is rotatable about a rotation axis 10.

For this purpose, the brewing unit 1 according to the invention further comprises driving means 21, 22, 23, 24 for moving the brewing chamber 2 from the loading position to the brewing position, and viceversa.

It has to be noted that in the movement from the brewing position to the loading position the brewing chamber is arranged in at least one position in which the exhausted ingredient is ejected from the brewing chamber.

The translation axis A of the brewing chamber can be coincident, or parallel, to the closing element axis EA.

In fact, the brewing chamber 2 is translated along a translation axis A, in such a way that the brewing chamber can be moved close to, and away from, the closing element 3.

The brewing chamber 2 can be rotated so that the brewing chamber axis CA can be arranged coincident, or parallel, to the translation axis A, and inclined with respect to the translation axis A. By doing so, the brewing chamber axis CA can be arranged coincident to the closing element axis EA and inclined with respect to the closing element axis EA.

The rotation of the brewing chamber 2 is preferably carried out about a rotation axis 10 that is transversal to the translation axis A along which the brewing chamber is moved, or transversal to an axis parallel to the translation axis A. According to a possible embodiment, the rotation axis 10 of the brewing chamber is perpendicular to the translation axis A, or to an axis parallel to the translation axis A.

It has to be noted that the rotation axis 10 of the brewing chamber can be transversal, and preferably perpendicular, to the closing element axis EA, or to an axis parallel to the closing element axis EA.

According to a possible embodiment, the rotation axis 10 of the brewing chamber 2 is perpendicular to the brewing chamber axis CA, or to an axis parallel to the brewing chamber axis CA.

According to another aspect of the invention, the rotation axis 10 of the brewing chamber is arranged outside the volume of the brewing chamber intended to house the ingredient.

In other words, the rotation axis 10 of the brewing chamber is arranged at a distance from the volume of the brewing chamber intended to house the ingredient, i.e. the volume defined by the opening 2a, the lateral surface 2c and the bottom surface 2b of the brewing chamber 2.

According to a possible embodiment the rotation axis 10 of the brewing chamber is arranged in such a way it does not intersect, i.e. it does not pass inside, the volume of the brewing chamber intended to house the ingredient. Preferably, the rotation axis 10 of the brewing chamber 2 is arranged below the plane defined by the bottom surface 2b of the brewing chamber 2. Advantageously, the position of the rotation axis 10 of the brewing chamber outside the volume intended to house the ingredient, preferably arranged below the plane passing through the bottom surface 2b of the brewing chamber, allows to cover an arc with a limited extent of the angle of rotation during the rotation movement of the brewing chamber.

This advantageously allows to reduce the dimensions of the brewing unit, in fact, it is possible to move the brewing chamber away from the closing element 3 in a position in which the ingredient can be supplied inside the brewing chamber with a reduced rotation of the brewing chamber.

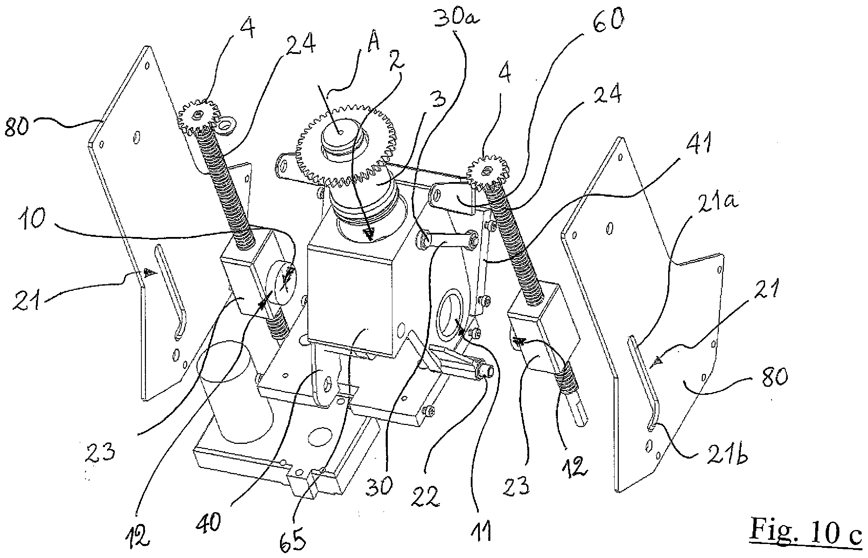

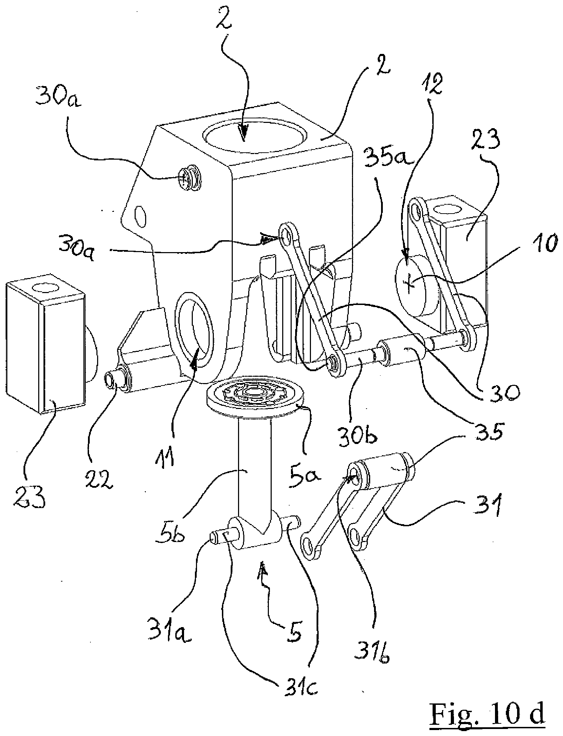

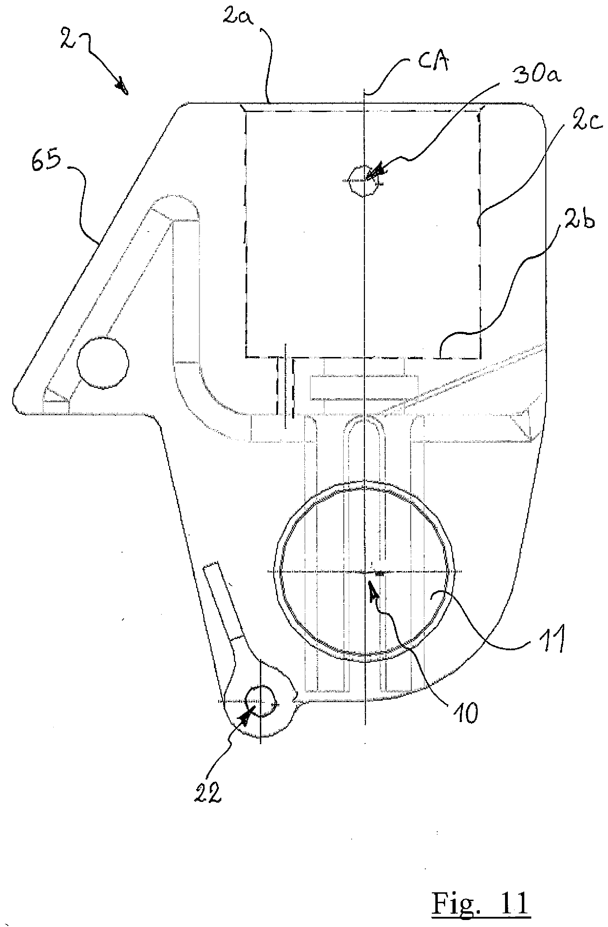

It has to be noted that different means can be used to provide the rotation axis 10 of the brewing chamber 2. According to a possible embodiment, as for example shown in figures 10c, 10d and 11, the brewing chamber is provided with at least one seat 11, arranged on an external surface, intended to define the rotation axis 10.

In particular as it will be disclosed in greater detail here below, the at least one seat 11 is intended to cooperate with a correspondent pin 12 so that the brewing chamber can be rotated about the rotation axis 10.

However, different means can be used to provide a rotation axis 10 of the brewing chamber.

With reference to the movement of the brewing chamber, according to a possible embodiment the driving means of the brewing chamber comprise a guide 21 in which a pin 22, directly or indirectly constrained to the brewing chamber, is moved.

The brewing chamber is moved by at least one carrier 23 axially movable by at least one worm screw 24, the worm screw 24 is arranged to define the translation axis A along which the brewing chamber 2 is translated. More in detail, the brewing chamber is rotatably constrained to the at least one carrier 23, in correspondence of the rotation axis 10.

According to a possible embodiment, as for example shown in the figures, a couple of worm screws 24 are mounted parallel to each other. A carrier 23 is arranged on each worm screw 24 to be axially movable along the screw 24 upon rotation of the latter. As known, carrier 23 is provided with a threaded portion, intended to cooperate with a threaded portion of the screw 24 so that the rotation of the screw, imposed by at least one motor, allows the movement of the carrier 23 along the screw 24.

By doing so, the translation movement of the brewing chamber along a translation axis A can be obtained. As mentioned above, the translation axis A of the brewing chamber can be defined by the axis of the at least one screw 24 along which the brewing chamber 2 is movable, for example by means of at least one carrier 23.

According to a possible embodiment, the at least one screw 24 is arranged parallel to the closing element axis EA, and preferably coplanar to the closing element axis EA.

Gearings 4 are arranged on at least either one end, i.e. either the upper or lower ends, of the gear screws in order for the motor (not shown) to mechanically couple to gearings 4 and, via these, to screws 24.

As already mentioned above, the brewing chamber is also rotated, so that the brewing chamber can be inclined with respect to the translation axis A. In other words, the brewing chamber is rotated so that the brewing chamber axis CA can be moved to reach at least one position in which it is coincident or parallel to the translation axis A (and/or with respect to the closing element axis EA), and at least one position in which the brewing chamber axis CA is inclined with respect to the translation axis A (and/or with respect to the closing element axis EA).

As already mentioned above, the brewing unit 1 comprises a guide 21 in which a pin 22 of the brewing chamber is moved. The guide 21 is provided with a first portion 21a, preferably a first rectilinear portion arranged parallel, or coincident, to the translation axis A, and a second portion 21b that can be at least in part curved and/or rectilinear.

According to a possible embodiment, as for example shown in the figures, the second portion 21b comprises a curved portion and a rectilinear portion. The rectilinear portion of the second portion 21b is preferably arranged at right angle with respect to the first rectilinear portion 21a. The two portions are generally connected by a curved connection portion.

Therefore the movement of the pin 22 constrained to the brewing chamber, inside the guide 21, results in a translation movement of the brewing chamber along the translation axis A, when the pin 22 is in the first portion 21a, and a rotation movement of the brewing chamber when the pin 22 is engaging the second portion 21b of the guide 21.

More in detail, the brewing chamber comprises a seat 11 intended to cooperate with a correspondent pin 12 arranged on the carrier 23. According to a possible embodiment, as for example shown in the figures, the brewing chamber 2 comprises two seats 11 intended to cooperate with a correspondent pin 12 of each carrier 23.

The rotation axis 10 is preferably arranged perpendicular to the translation axis A, or to an axis parallel to the translation axis A. The rotation axis 10 can be arranged perpendicular to the axis EA of the closing element, or to an axis parallel to closing element's axis EA.

In view of above, the movement of the brewing chamber along the translation axis A is controlled by means of the position of the carrier 23 along the worm screw 24. Additionally the rotation of the brewing chamber can be controlled by means of the position of the pin 22 inside the guide 21. The pin 22 and the guide 21 are arranged so that when the pin 22 engages the first portion 21a of the guide parallel to the screw 24, the brewing chamber is arranged with the brewing chamber axis CA coincident, or parallel, to the translation axis A. It has to be noted that in this position the brewing chamber axis CA may be coincident with the closing element axis EA. The movement of the pin 22 in the first portion 21a of the guide 21 is preferably 70%, more preferably 80%, and most preferably 90% of the total displacement of pin 22 inside the guide 21. In fact, in the first portion 21a of the guide 21, the pin 22 is maintained at a constant distance from translation axis A of the brewing chamber. When the pin 22 engages the second portion 21b of the guide 21, the distance of the pin 22 from the translation axis A is changed and therefore the brewing chamber is rotated with respect to the carrier 23. It follows that the brewing chamber is rotated and the brewing chamber axis CA is not parallel, or coincident, to the translation axis A (and /or to the closing element axis EA).

According to an aspect of the invention, the brewing unit is provided with means to detect the position of the brewing chamber during the movement between the loading position and the brewing position. For example, an encoder-equipped motor or Hall-sensor devices may be used tracking movements up to a unit value of accuracy smaller than 1 mm, preferably smaller than 0.5 mm, and most preferably smaller than 0.1 mm, with respect to the linear displacement of the brewing chamber 2.

According to an aspect of the invention, the brewing chamber 2 has a brewing chamber axis CA that is inclined with respect to a vertical axis V of the brewing unit, in both the loading position and in the brewing position. Preferably, the inclination of the brewing chamber axis CA in the loading position is opposite to the inclination of the brewing chamber axis CA in the brewing position with respect to the vertical axis.

It has to be noted that the vertical axis V is taken from the plane on which the brewing unit 1 stands in operation, and in particular from the plane on which the beverage dispensing machine in which the brewing unit is used stands. Using the vertical axis V as a reference axis, in the brewing position the brewing chamber axis CA is arranged at a negative angle y (left side in the figures with respect to the vertical axis V) and in the loading position, the brewing chamber axis CA is arranged at a positive angle β (right side in the figure with respect to the vertical axis V).

In other words, when the brewing chamber 2 is in the brewing position, preferably with the brewing chamber axis CA parallel or coincident to the translation axis A, it has an inclination which is opposite to the inclination in the loading position, wherein the brewing chamber axis CA is inclined with respect to the translation axis A of the brewing chamber.

In general, the brewing chamber axis CA can be arranged at a positive, or negative, angle with respect to the vertical axis V in the loading position and the brewing chamber axis CA can be arranged respectively at a negative, or positive, angle with respect to the vertical axis V in the brewing position. Advantageously, when the brewing chamber 2 is in the loading position, the brewing chamber axis CA is inclined at a positive angle with respect to the vertical axis V, subsequently, when the ingredient is fed, it will fall distributing itself in a conical fashion inside the brewing chamber. The central axis of such cone may be not coincident with axis CA. The vertex of such cone is going to be positioned accordingly to the position of the brewing chamber relative to the ingredient container outlet, for example a grinder's outlet, arranged above the loading position of the brewing chamber 2.

By the subsequent movement of the brewing chamber towards the brewing position, and in particular by the rotation movement about the rotation axis 10, the brewing chamber axis is rotated to pass the vertical axis V and to reach an inclined position in the brewing position, having an opposite inclination with respect to the inclination assumed in the loading position. The movement of the brewing chamber, and in particular the rotation movement, to pass from a positive inclination, to a negative inclination, with respect to a vertical axis V, determines the movement of the ingredient inside the brewing chamber which reaches a substantially uniform distribution inside the brewing chamber when the latter reaches the brewing position. According to possible embodiments, the angle γ between the vertical axis V and the brewing chamber axis CA in the loading position is comprised in the range 5° - 20°, preferably in the range 8°- 16°, more preferably is about 12°. According to possible embodiments, the angle β between the vertical axis V and the brewing chamber axis CA in the brewing position is comprised in the range 10° - 90°, preferably in the range 10° - 50°, more preferably in the range 20° - 40°, most preferably is about 30°.

According to a possible embodiment, the translation axis A of the brewing chamber is arranged with respect to the vertical axis V at an angle comprised in the range 10° - 90°, preferably in the range 10° - 50°, more preferably in the range 20° - 40°, most preferably is about 30°.

According to a possible embodiment, the brewing chamber axis CA and the translation axis A are lying on a same plane.

According to possible embodiments, the angle between the brewing chamber axis CA in the loading position and the brewing chamber axis CA in the brewing position is comprised in the range 15° - 110°, preferably in the range 15° - 70°, more preferably in the range 28° - 56°, most preferably is about 42°.

According to possible embodiments, the angle α (visible in figure 1) between the translation axis A of the brewing chamber and the brewing chamber axis CA in the loading position is comprised in the range 15° - 110°, preferably in the range 15° - 70°, more preferably in the range 28° - 56°, most preferably is about 42°. Returning now to the movement of the piston 5 with respect to the brewing chamber 2, as mentioned above, the piston 5 and thus the filter portion 5a and the stem portion 5b, are movable between a retracted position and an extended position.

In particular, the piston 5 is arranged in the retracted position, preferably at least when the brewing chamber is in the loading position and a dose of ingredient has to be supplied in the brewing chamber. The piston is arranged in the extended position, for ejecting an exhausted ingredient from the brewing chamber, for at least part of the movement of the brewing chamber from the brewing position to the loading position. Therefore, when the brewing chamber returns in the loading position it is empty and a new dose of fresh ingredient can be supplied therein.

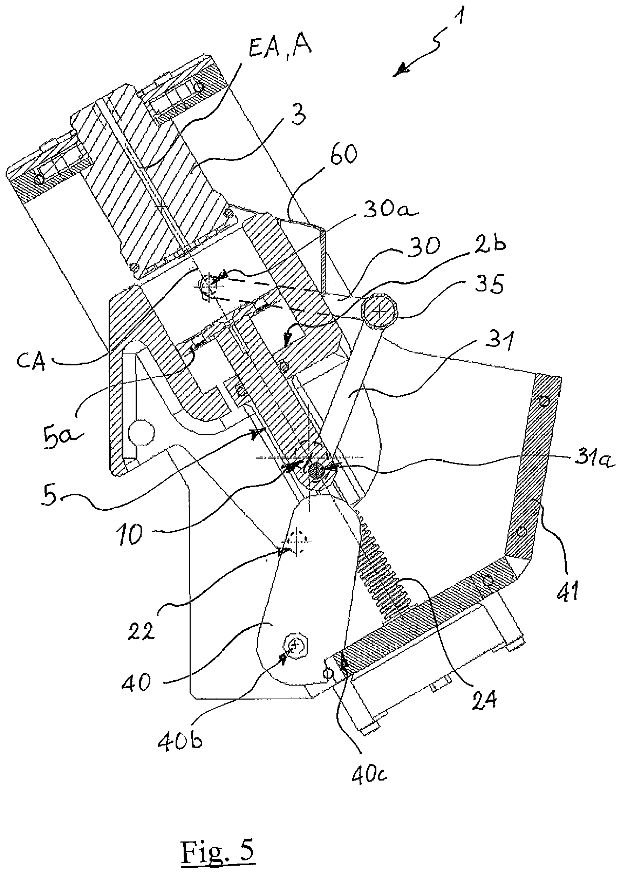

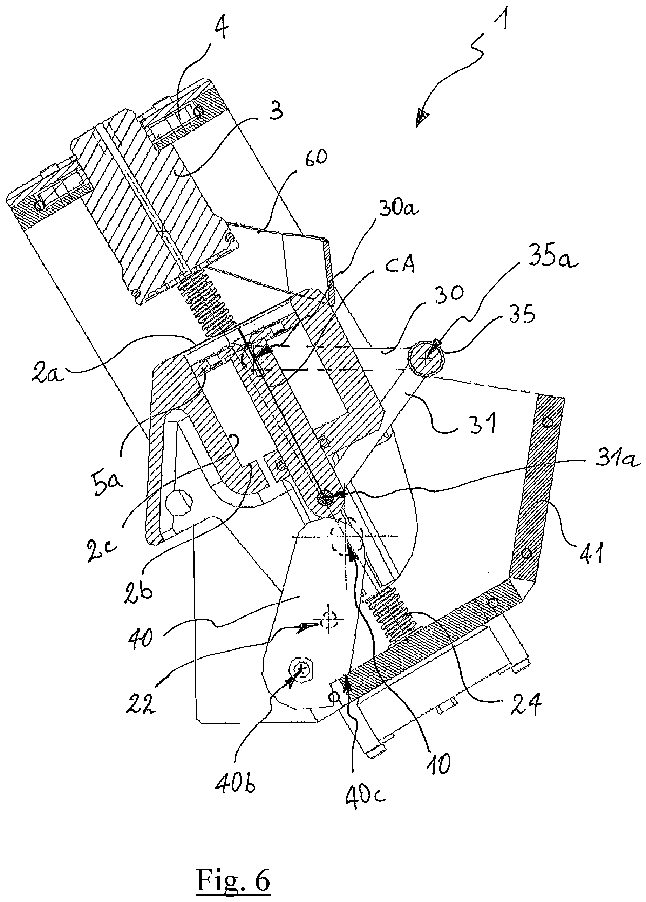

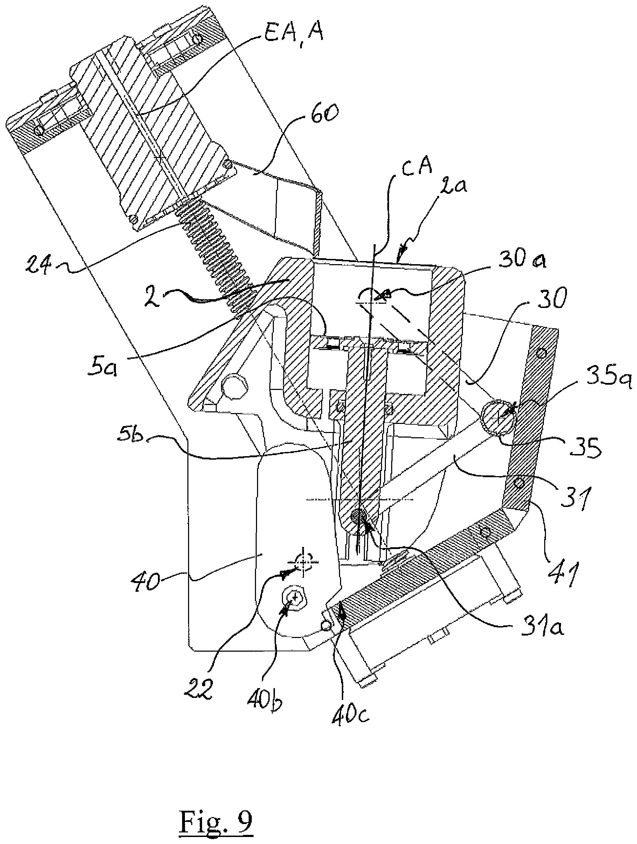

In the retracted position the filter portion 5a of the piston 5 is arranged in correspondence of, or close to, the bottom 2b of the brewing chamber, as for example visible in figures 1, 2, 3, 4. In the extended position the filter portion 5a is arranged in correspondence of, or close to, the opening surface 2a of the brewing chamber 2, as for example shown in figures 6, 7 and 8. It has to be noted that in figures 5 and 9, the piston 5 and the filter portion 5a are arranged in an intermediate position between the retracted position and the extended position.

To move the piston 5, the brewing unit comprises at least a first element 30 rotatably constrained to the brewing chamber 2 at a first rotation axis 30a and at least a second element 31 rotatably constrained to the piston 5 at a second rotation axis 31a.

According to a possible embodiment, the element 30, 31 is a substantially elongated element.

It has to be noted that according to a possible embodiment, the first and second elements 30 and 31 can be made by a single element constrained to the brewing chamber 2 at a first rotation axis 30a and rotatably constrained to the piston 5 at a second rotation axis 31a. The single connection element is provided with a deformable portion forming, arranged between the first and second rotation axes, to provide a third rotation axis 35a.

In an exemplary embodiment shown in the figures there is a couple of first and second elements connected together. In the preferred embodiment shown in the figures, the first and second elements are rods; in the following description, reference will be made to rods without limiting the scope of the invention only to the presence of rods in the brewing unit.

The first and second rods 30, 31 are rotatably constrained one to another by a connecting portion 35, at a third rotation axis 35a.

As disclosed in detail here below, operating means 40, 41 are provided to modify the relative position between the first rotation axis 30a and the second rotation axis 31a, thus causing a modification of the piston 5 with respect to the brewing chamber 2.

According to a possible embodiment, as for example shown in the perspective view of figure 10, the brewing unit 1 is provided with a pair of first rods 30, which are arranged parallel one to another and connected by means of a cross element 30b.

Each first rod 30 is rotatably constrained to the brewing chamber 2, preferably in correspondence of the external surface of the brewing chamber. In the embodiment shown in the figures, the pair of first rods 31 are arranged so that they are rotatable with respect to the brewing chamber 2 about the same rotation axis 30a. The constraint between the brewing chamber and the first rod 30 can be realized by known means, e.g. by a pin protruding from the brewing chamber intended to be engaged in a corresponding seat of the first rod 30, or viceversa. According to a possible embodiment, the first rod 30 is constrained to the brewing chamber at the rotation axis 30a substantially in correspondence of one end of the first rod 30.

The brewing unit can be also provided with a pair of second rods 31, which are arranged parallel one to another and connected by at least one cross element 31b. According to a possible embodiment, a cross element 31b is provided to connect to each other the two second rods 31.

The second rod 31 is constrained to the piston 5, and in particular to the stem portion 5b, preferably in correspondence of an end of the second rod 31. According to a possible embodiment, the second rod 31 is constrained to the piston 5, and in particular to the stem portion 5b, in correspondence of an end thereof.

The rotatably constraint between the second rod 31 to the piston 5, to allow a rotation about the rotation axis 31a can be realized in different ways.

For example, according to a possible embodiment, as for example shown in figure 10d, two second rods 31 are connected to a correspondent pin 31c passing through the second rod 31 and the piston 5.

The connecting portion 35 between the at least one first rod 30 and the at least one second rod 31 can be realized by known means. According to a possible embodiment, as for example shown in figures 10a and 10d, the cross element 30b of the two first rods 30 is passed inside a correspondent seat of the cross element 31b of the two second rods 31.

Therefore a connecting portion 35 can be formed by the cooperation of the cross elements 30b and 31b to provide a rotation axis 35a between the first and second rods 30, 31.

It has to be understood that other constraining means between the at least one first rod 30 and the at least one second rod 31 can be utilized, provided that a rotation constraint, i.e. a hinge, is formed allowing the relative rotation of the first and second rods 30, 31 about a rotation axis 35a.

A roller can be arranged in correspondence of the rotation axis 31a of the second rod 31 with respect to the piston 5, preferably in correspondence of the cross element 31c, and/or in correspondence of the connecting portion 35 between the first and second rods 30, 31.

In fact, as it will be disclosed later in greater detail, the connecting portion 35 and the piston 5, preferably in correspondence of rotation axis 31a, can be contacted by operating means 40, 41 intended to control the movement of the piston 5 with respect to the brewing chamber 2.

According to a preferred embodiment, as for example shown in the figures, the rotation axis 30a of the first rod 30 and the rotation axis 31a of the second rod 31 are parallel one to another. Also the rotation axis 35a formed at the connecting portion 35 between the first rod 30 and the second rod 31 is parallel to the rotation axes 30a and 31a.

According to a possible embodiment, the rotation axis 30a of the first rod 30 and the rotation axis 31a of the second rod 31 are perpendicular to a plane in which the rotation movement of the brewing chamber is carried out.

More in detail, according to a possible embodiment, the rotation axis 30a of the first rod and the rotation axis 31 a of the second rod 31 are parallel to the rotation axis 10 about which the brewing chamber is rotated.

In other words, the axes 30a and 31a are parallel to the rotation axis 10 of the brewing chamber with respect to the carrier 23.

It has to be noted that also the rotation axis 35a at the connection portion 35 between the first rod 30 and the second rod 31 is also parallel to the rotation axis 10 of the brewing chamber 2.

According to a possible embodiment, the rotation axis 30a of the first rod 30 and the rotation axis 31a of the second rod 31 are perpendicular to the brewing chamber axis CA. According to a possible embodiment, the rotation axis 30a of the first rod 30 and the rotation axis 31a of the second rod 31 lie on a plane passing through, or parallel to, the brewing chamber axis CA. According to a possible embodiment, the brewing chamber axis CA and the rotation axes 30a and 31a of the first and second rods 30 and 31 are arranged on the same plane, i.e. are coplanar.

Also the rotation axis 10 of the brewing chamber 2 is preferably arranged on the same plane of the brewing chamber axis CA and of the rotation axis 30a of the first rod 30 and of the rotation axis 31a of the second rod 31.

It has to be noted that the connection of the piston 5 to the brewing chamber 2 by means of the at least one first element (e.g. a rod) 30 and the at least one second element (e.g. a rod) 31 can be considered a kinematic system comprising a crank and a connecting rod, wherein the crank is the first rod 30, rotatably constrained to the chamber 2 at the rotation axis 30a, and the connecting rod is the second rod 31 rotatably constrained to the piston 5 at the rotation axis 31a. The crank and the connecting rod are rotatably connected one to another at the connecting portion 35, to rotate about the rotation axis 35a.

In fact, the rotation of the first rod 30 at the rotation axis 30a is transformed in a linear movement of the piston 5. The rotation axis 31a is moved from a position in which it is closer to the rotation axis 30a of the first rod 30 to a position in which it is at a higher distance from the rotation axis 30a of the first rod 30.

However it has to be noted that, as for example shown in the figure, contrary to a classic crank and connecting rod system, the crank (first rod 30) is preferably not completely rotated (rotated of a 360 degrees) about the rotation axis 30a.

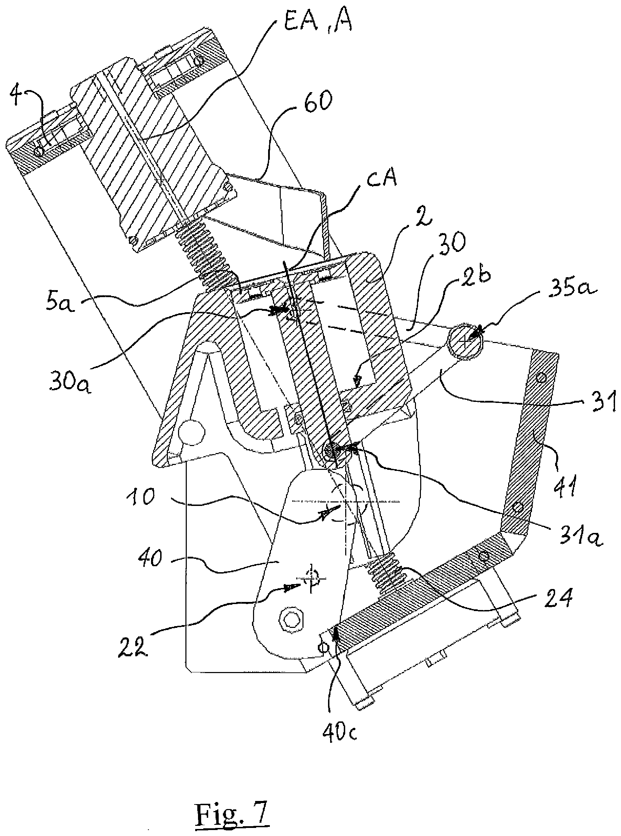

In fact, as for example visible in the figures, the first rod 30 is rotated about the rotation axis 30a with respect to the axis of the brewing chamber 2 of an angle comprised between the position shown for example in figure 1, corresponding to the retracted position of the piston 5, and the position shown for example in figures 7 and 8, corresponding to the extended position of the piston 5.

As mentioned above, the brewing unit according to the invention further comprises operating means 40, 41 to modify the relative position between the first rod 30 and the second rod 31. More in detail, the operating means 40, 41 are configured to modify the distance D between the rotation axis 31a of the second rod 31 and the rotation axis 30a of the first rod 30.

It has to be noted that the distance D is preferably measured along a rectilinear line perpendicular to the rotation axes 30a and 31a. As for example shown in the figure, according to a possible embodiment the distance D is measured along the line defined by the brewing chamber axis CA. In general, the distance D can be measured between two parallel planes on which each axes 30a and 31a are lying. The distance D is measured along a rectilinear line perpendicular to said two planes on which the rotation axes 30a and 31a are lying.

The distance D between the two axes 30a and 31a is preferably maximum at the retracted position of the piston 5, i.e. when the filter portion 5a is arranged in correspondence of, or close to, the bottom surface 2b of the brewing chamber (see figures 1 - 4).

The distance between the axes 31a and 30a is minimum when the piston 5 is in the extended position and it is moved inside the brewing chamber and the filter portion 5a is arranged in correspondence of, or close to, the opening 2a of the brewing chamber (see figure 8).

It has to be also noted that the modification of the distance between the rotation axes 30a and 31a, and thus the movement of the piston 5 with respect to the brewing chamber 2, can be also measured by means of the internal angle δ formed by the first rod 30 and the second rod 31 at the connecting portion 35.

The angle δ is maximum at the retracted position of the piston 5 and minimum at the extended position of the piston 5. According to a possible embodiment, as for example shown in the figures, the angle δ at the retracted position of the piston 5 is 90° (see figures 1 to 4) and the angle δ at the extended position of the piston 5 is 45° (see figure 8).

The brewing unit 1 according to the invention comprises first operating means 41 arranged to increase the distance D between the first rotation axis 30a and the second rotation axis 31a and second operating means 40 arranged to decrease the distance D between the first rotation axis 30a and the second rotation axis 31a.

According to possible embodiments, the same operating means can be used to increase and to decrease the distance of the rotation axes 30a, 31a. However, according to a preferred embodiment, as for example shown in the figures, different operating means 41, 40 are respectively intended to increase and to decrease the distance D between the rotation axes 30a and 31a.

As already mentioned above, the increasing or the decreasing of the distance between the rotation axes 30a and 31a of the first and second rods 30, 31, is carried out between a maximum distance, preferably reached when the filter portion 5a is in correspondence of the bottom surface 2b of the brewing chamber (retracted position of the piston) and a minimum distance preferably reached when the filter portion 5a is in correspondence of the opening 2a of the brewing chamber 2 (extended position of the piston).

According to a possible embodiment, the first operating means 41 arranged to increase the distance between the first rotation axis 30a and the second rotation axis 31a engages the connecting portion 35 between the first rod 30 and the second rod 3) in at least one position of the brewing chamber 2 between the brewing position and the loading position.

Said first operating means comprise at least one guiding surface 41, preferably a surface of the frame 80 of the brewing unit.

The guiding surface is preferably a flat surface, as for example shown in the figures. The guiding surface is arranged so that in at least one position between the brewing position and the loading position the guiding surface 41 engages the connecting portion 35 to guide it towards the brewing chamber 2 (see for example figure 9).

More in detail, during the rotation movement of the brewing chamber from the position shown in figure 9 to the loading position shown in figure 1, the guiding surface 41 is contacting the connecting portion 35 and is urging it towards the brewing chamber, so that the distance D between the rotation axes 30a and 31a of the first and second rods 30 and 31 is increased and the piston 5 is returned in the retracted position. According to an aspect of the invention, the guiding surface 41 is contacting the connecting portion 35 and is urging it towards the plane on which the first and second ration axes 30a and 31a are lying.

In this position, as for example shown in figure 1, the filter portion 5a is in correspondence of, or close to, the bottom surface 2a of the brewing chamber and a new dose of ingredient can be supplied inside the brewing chamber 2.

According to a possible embodiment, the second operating means 40 arranged to decrease the distance between the first rotation axis 30a and the second rotation axis 31a contact the piston 5, preferably at an end portion of the piston 5 in at least one position of the brewing chamber 2 between the brewing position and the loading position.

The second operating means 40 arranged to decrease the distance between the first rotation axis 30a and the second rotation axis 31a comprise at least one lever 40.

According to a possible embodiment, the lever 40 is movable between at least one operative position, in which the lever is incident to the movement path of said piston 5 during at least part of the movement of the brewing chamber 2 from the brewing position to the loading position, and at least one inoperative position in which the lever is not incident to the movement path of the piston 5.

More in detail, in the operative position, the lever 40 contacts the piston 5, and in particular the stem portion 5b, to determine a movement of the piston 5 with respect to the brewing chamber. In fact, the lever prevents the movement of the piston 5, or substantially is opposing the movement of the piston 5, for at least part of the movement of the brewing chamber from the brewing position and the loading position (see figures 5, 6, 7 and 8).

In the inoperative position, the lever 40 is not incident to the movement path of the piston so that the lever 40 does not interfere with the movement of the piston 5 (see figures 1 to 3).

According to a possible embodiment, as for example shown in the figures, the lever 40 is shaped to comprise at least one curved portion intended to be contacted by the piston 5, and in particular by the piston stem 5b.

The curved portion is shaped so as to allow the contact with the piston 5 when the lever is incident to the movement path of the piston (see for example figures 5 - 8) and pin 22 is moved along the rectilinear portion 21a of guide 21, in a downward direction. In this configuration, the downward movement of the bottom edge of stem 5b is (directly or indirectly) stopped by the top curved portion of the lever 40.

When pin 22 engages the curved and rectilinear portion 21b of guide 21, brewing chamber 2 is rotated and the bottom edge of piston's stem 5b is rotated with the chamber 2 and moves along and around the top curved portion of lever 40 (see figures 7 and 8) until the stem 5b is positioned on the side of the lever as shown in fig. 9. This arrangement allows the full rotation of the brewing chamber 2 and thus of the piston 5 into the loading position of figure 1.

According to a possible embodiment, the lever 40 is constrained at a rotation axis 40b and is rotatable about this axis.

According to a possible embodiment, the rotation axis 40b of the lever 40 is parallel to the rotation axis 10 of the brewing chamber 2.

According to a possible embodiment, the rotation axis 40b of the lever 40 is parallel to rotation axes 30a and 31a of the first and second rods 30, 31. The lever 40 can be also provided with elastic means 40a arranged to bias the lever 40 in the at least one operative position.

More in detail, the lever 40 is biased by elastic means in the position in which it is incident to the movement path of the piston 5 during the translation movement of the brewing chamber 2 from the brewing position to the loading position.

According to a possible embodiment, the elastic means 40a are arranged to bias the lever in contact with a stop 40c, more in detail the elastic means 40a rotates the lever 40 about the rotation axis 40b in a clockwise direction, as shown in the figures.

The brewing unit 1 according to another possible embodiment comprises at least one wiper element 60 for removing the exhausted ingredient pushed outside the brewing chamber by the piston 5.

More in detail, the wiper element 60 allows to remove the exhausted ingredient, e.g. a coffee cake, ejected outside the brewing chamber by the piston 5 in the extended position.

According to a possible embodiment, the wiper element 60 is substantially U-shaped, however different shapes can be used.

The wiper element can be rotatably constrained to brewing unit 1, preferably on the support frame 80 of the brewing unit (see for example figure 10a). The wiper element 60 is rotatable about a rotation axis 60a.

According to a possible embodiment, the rotation axis 60a of the wiper element 60 is arranged parallel to the rotation axis 10 of the brewing chamber 2 so that the wiper element 60 can be arranged in contact with the brewing chamber 2, and follows the shape of the brewing chamber 2 during the movement thereof.

Elastic means not shown, such as a spring, can be provided to force (bias) the wiper in a lowered position, such as for example the position shown in figure 1.

The movement of the wiper element 60, and in particular its rotation movement about the rotation axis 60a, is guided by the contact with the brewing chamber 2 itself and/or the first rod 30.

During the movement of the brewing chamber 2 from the loading position to the brewing position (e.g. from figure 1 to figure 4) the wiper element 60 is contacted by the upper surface of the brewing chamber and rotated in anticlockwise direction.

When the brewing chamber 2 is moved from the brewing position to the loading position (e.g. form figure 4 to figure 9), the wiper element 60 is used to eject the exhausted ingredient from the brewing chamber.

In fact, as shown in the figures 5, 6, 7, 8 and 9, while the brewing chamber is translated and rotated toward the loading position from the brewing position, the wiper element 60 contacts the upper surface of the brewing chamber. In the meanwhile, as already mentioned above, the piston 5 is moved in the operative position, i.e. is arranged in correspondence of, or close to, the opening 2a of the brewing chamber.

Therefore the dose of exhausted ingredient is arranged outside the brewing chamber 2 and contacted by the wiper element 60 during the rotation about the rotation axis 10, preferably the clockwise rotation in the embodiment shown in the figure, of the brewing chamber towards the loading position. The dose of exhausted ingredient is thus expelled in a container, not shown, by sliding on an ejecting surface 65 provided on the brewing chamber 2. The present invention also relates to a method of operating a brewing unit 1 according to claim 12. It has to be understood that features and aspects disclosed herein with reference to the brewing unit can be applied to the method and features and aspect disclosed with reference to the method can be applied to the brewing unit.

The steps of the method are schematically shown in the figures 1 to 9, in which after the position reached in figure 9 the brewing unit is further moved to return in the position of figure 1.

The method of operating a brewing unit 1 for dispensing a beverage comprises the step of loading an ingredient in said brewing chamber through an opening 2a when the brewing chamber is in a loading position, see for example figure 1. The method further comprises the step of actuating the driving means 21, 22, 23, 24, and in particular a motor to rotate the at least one worm screw 24 to move the at least one carrier 23.

By doing so, the brewing chamber 2 connected to the carrier 23 is moved from the loading position (see figure 1) in which it is disengaged from the closing element 3 to the brewing position in which the brewing chamber 2 engages the closing element 3 (see figure 4). In this position the method comprises the step of injecting at least one diluent in then brewing chamber 2 to extract the ingredient. At the end of the brewing step in which the diluent is injected inside the brewing chamber and beverage is dispensed, the method comprises the further step of activating the driving means 21, 22, 23, 24 to move back the brewing chamber from the brewing position to the loading position.

As already disclosed above in connection to the brewing unit, during at least part of the movement of the brewing chamber from the brewing position (figure 4) to the loading position (figure 1) the operating means 40, 41 modifies the position of the piston 5 with respect to the brewing chamber 2 to eject the exhausted ingredient from the brewing chamber by modifying the relative position of a first rotation axis 30a and the second rotation axis 31a. As already disclosed above in connection to the brewing unit 10, in the loading position the brewing chamber axis CA is inclined with respect to a vertical axis V) of an angle γ comprised in the range 5° - 20°, preferably in the range 8°- 16°, more preferably is about 12°.

According to an aspect of the invention, during the movement of the brewing chamber 2 between a loading position and a brewing position, and in both the loading position and in the brewing position the brewing chamber axis CA is inclined with respect to a vertical axis V of the brewing unit. Preferably, the inclination of the brewing chamber axis CA in the loading position is opposite to the inclination of the brewing chamber axis CA in the brewing position with respect to the vertical axis.

## Claims

1. A brewing unit (1) for a beverage dispensing machine comprising a brewing chamber (2) and a closing element (3), wherein the brewing chamber is movable between a loading position in which is disengaged from the closing element (3) to receive an ingredient through an opening (2a) of the brewing chamber and a brewing position in which the brewing chamber (2) engages the closing element (3), driving means (21, 22, 23, 24) for moving the brewing chamber at least from said loading position to said brewing position and from the brewing position to the loading position, a piston (5) having a filter portion (5a) arranged inside the brewing chamber (2) and a stem portion (5b) protruding outside said brewing chamber (2), said piston (5) being movable with respect to said brewing chamber (2), said brewing unit further comprising
a first element (30) rotatably constrained to the brewing chamber (2) at a first rotation axis (30a) and a second element (31) constrained to the piston (5), said first and second elements (30, 31) being rotatably constrained one to another by a connecting portion (35) at a third rotation axis (35), and **characterized in that** the second element (31) is rotatably constrained to the piston (5) at a second rotation axis (31a) and **in that** the brewing unit (1) further comprises operating means (40, 41) to modify the relative position between the first rotation axis (30a) and the second rotation axis (31a) and the position of said piston (5) with respect to said brewing chamber (2).

2. The brewing unit according to claim 1, comprising first operating means (41) arranged to increase the distance (D) between the first rotation axis (30a) and the second rotation axis (31a) and second operating means (40) arranged to decrease the distance (D) between the first rotation axis (30a) and the second rotation axis (31a).

3. The brewing unit according to claim 2, wherein said first operating means (41) engages the connecting portion (35) between the first element (30) and the second element (31) in at least one position of the brewing chamber (2) between the brewing position and the loading position.

4. The brewing unit according to claim 2 or 3, wherein said first operating means (41) comprises at least one guiding surface (41) and in said at least one position between the brewing position and the loading position the guiding surface (41) engages the connecting portion (35) to guide it towards said brewing chamber (2).

5. The brewing unit according to any claim 2 to 4, wherein said second operating means (40) contacts the piston (5), preferably at an end portion of the piston (5) in at least one position of the brewing chamber (2) between the brewing position and the loading position.

6. The brewing unit according to any claim 2 to 5, wherein said second operating means (40) comprises at least one lever (40) movable between at least one operative position in which the lever is incident to the movement path of said piston (5) during at least part of the movement of the brewing chamber (2) from the brewing position to the loading position and at least one inoperative position in which the lever is not incident to the movement path of the piston (5).

7. The brewing unit according to claim 6, wherein said lever (40) comprises elastic means (40a) biasing the lever (40) in said at least one operative position.

8. The brewing unit according to any previous claims, wherein the brewing chamber (2) has a brewing chamber axis (CA), in said loading position and in said brewing position the brewing chamber axis (CA) being inclined with respect to a vertical axis (V) of the brewing unit, the inclination of the brewing chamber axis (CA) in the loading position being opposite to the inclination of the brewing chamber axis (CA) in the brewing position.

9. The brewing unit according to claim 8, wherein the angle (γ) between the vertical axis (V) and the brewing chamber axis (CA) in said loading position is comprised in the range 5° - 20°, preferably in the range 8°-16°, more preferably is about 12°.

10. The brewing unit according to claim 8 or 9, wherein the angle (β) between the vertical axis (V) and the brewing chamber axis (CA) in the brewing position is comprised in the range 10° - 90°, preferably in the range 10° - 50°, more preferably in the range 20° - 40°, most preferably is about 30°.

11. A beverage dispensing machine comprising at least one brewing unit (1) according to any previous claim.

12. A method of operating a brewing unit (1) according to any claims 1 to 10 for dispensing a beverage, comprising the step of loading an ingredient in said brewing chamber through an opening (2a) when said brewing chamber is in a loading position, the step of actuating driving means (21, 22, 23, 24) to move the brewing chamber from said loading position in which is disengaged from a closing element (3) to a brewing position in which the brewing chamber (2) engages a closing element (3), and the further step of activating said driving means (21, 22, 23, 24) to move back the brewing chamber from said brewing position into said loading position, wherein during at least part of the movement of the brewing chamber from the brewing position to the loading position, operating means (40, 41) modifies the position of a piston (5) with respect to the brewing chamber (2) to eject the exhausted ingredient from the brewing chamber by modifying the relative position of a first rotation axis (30a) of a first element (30) rotatably constrained to the brewing chamber (2) at said first rotation axis (30a) and of a second rotation axis (31a) of a second element (31) rotatably constrained to the piston (5) at said second rotation axis (31a).

13. Method according to claim 12, wherein the brewing chamber (2) is moved between a loading position and a brewing position, wherein in the loading position the brewing chamber axis (CA) is inclined with respect to a vertical axis (V) of an angle (γ) comprised in the range 5° - 20°, preferably in the range 8°- 16°, more preferably is about 12°.

14. A brewing unit (1) according to any claim 1 to 10, wherein said brewing chamber (2) is rotatable about a rotation axis (10) arranged outside the volume of the brewing chamber intended to house the ingredient.

15. The brewing unit according to claim 14, wherein said rotation axis (10) of the brewing chamber (2) is arranged below the plane defined by the bottom surface (2b) of the brewing chamber (2).

16. The brewing unit according to claim 14 or 15, wherein said brewing chamber (2) is movable along a translation axis (A), said rotation axis (10) of the brewing chamber (2) being perpendicular to said translation axis (A) along which the brewing chamber is translated, or perpendicular to an axis parallel to the translation axis (A).

17. The brewing unit according to any claim 14 to 16, wherein said rotation axis (10) of the brewing chamber (2) is perpendicular to a brewing chamber axis (CA), or to an axis parallel to the brewing chamber axis (CA).

18. Beverage dispensing machine comprising at least one brewing unit (1) according to any claim 14 to 17.

## Patentansprüche

1. Eine Brüheinheit (1) für eine Getränkeabgabevorrichtung umfassend eine Brühkammer (2) und ein Verschließelement (3), wobei die Brühkammer zwischen einer Ladeposition, in der sie von dem Verschließelement (3) nicht in Eingriff gebracht ist, um einen Bestandteil durch eine Öffnung (2a) der Brühkammer aufzunehmen, und einer Brühposition, in der die Brühkammer (2) das Verschließelement (3) eingreift, bewegbar ist, Antriebsmittel (21, 22, 23, 24) zum Bewegen der Brühkammer mindestens aus der Ladeposition in die Brühposition und von der Brühposition in die Ladeposition, einen Kolben (5) mit einem innerhalb der Brühkammer (2) angeordneten Filterabschnitt (5a) und einem außerhalb der Brühkammer (2) vorspringenden Schaftabschnitt (5b), wobei der Kolben (5) in Bezug auf die Brühkammer (2) bewegbar ist, wobei die Brüheinheit ferner umfasst:
ein erstes Element (30), welches drehbar mit einer ersten Drehachse (30a) an die Brühkammer (2) gezwungen ist, und ein zweites Element (31), welches an den Kolben (5) gezwungen ist, wobei das erste und zweite Elemente (30, 31) durch einen Verbindungsabschnitt (35) an einer dritten Drehachse (35) drehbar zueinander gezwungen sind, und **dadurch gekennzeichnet, dass** das zweite Element (31) drehbar an den Kolben (5) an der zweiten Drehachse (31a) gezwungen ist und dass die Brüheinheit (1) ferner Betätigungsmittel (40, 41) umfasst, um die relative Position zwischen der ersten Drehachse (30a) und der zweiten Drehachse (31a) und der Position des Kolbens (5) in Bezug auf die Brühkammer (2) zu modifizieren.

2. Brüheinheit nach Anspruch 1, umfassend ein erstes Betätigungsmittel (41), welches angeordnet ist, um den Abstand (D) zwischen der ersten Drehachse (30a) und der zweiten Drehachse (31a) zu vergrößern, und ein zweites Betätigungsmittel (40), welches angeordnet ist, um den Abstand (D) zwischen der ersten Drehachse (30a) und der zweiten Drehachse (31a) zu verringern.

3. Brüheinheit nach Anspruch 2, wobei das erste Betätigungsmittel (41) den Verbindungsabschnitt (35) zwischen dem ersten Element (30) und dem zweiten Element (31) in mindestens einer Position der Brühkammer (2) zwischen der Brühposition und der Ladeposition eingreift.

4. Brüheinheit nach Anspruch 2 oder 3, wobei das erste Betätigungsmittel (41) mindestens eine Führungsfläche (41) aufweist und wobei die Führungsfläche (41) in der mindestens einen Position zwischen der Brühposition und der Ladeposition den Verbindungsabschnitt (35) eingreift, um ihn zu der Brühkammer (2) zu führen.

5. Brüheinheit nach einem der Ansprüche 2 bis 4, wobei das zweite Betätigungsmittel (40) den Kolben (5) berührt, vorzugsweise an einem Endabschnitt des Kolbens (5), in mindestens einer Position der Brühkammer (2) zwischen der Brühposition und der Ladeposition.

6. Brüheinheit nach einem der Ansprüche 2 bis 5, wobei das zweite Betätigungsmittel (40) mindestens einen Hebel (40) aufweist, der zwischen mindestens einer Betriebsposition, in der der Hebel auf die Bewegungsbahn des Kolbens (5) während mindestens einem Teil der Bewegung der Brühkammer (2) von der Brühposition zu der Beladeposition auftrifft, und mindestens einer Ruheposition, in der der Hebel nicht auf die Bewegungsbahn des Kolbens (5) auftrifft, bewegbar ist.

7. Brüheinheit nach Anspruch 6, wobei der Hebel (40) elastische Mittel (40a) aufweist, die den Hebel (40) in der mindestens einen Betriebsposition vorspannen.

8. Brüheinheit nach einem der vorhergehenden Ansprüche, wobei die Brühkammer (2) in der Ladeposition und in der Brühposition eine Brühkammerachse (CA) aufweist, wobei die Brühkammerachse (CA) gegenüber einer vertikalen Achse (V) der Brüheinheit geneigt ist, wobei die Neigung der Brühkammerachse (CA) in der Ladeposition der Neigung der Brühkammerachse (CA) in der Brühposition entgegengesetzt ist.

9. Brüheinheit nach Anspruch 8, wobei der Winkel (γ) zwischen der vertikalen Achse (V) und der Brühkammerachse (CA) in der Ladeposition im Bereich von 5° bis 20°, vorzugsweise im Bereich von 8° bis 16°, besonders bevorzugt bei etwa 12° liegt.

10. Brüheinheit nach Anspruch 8 oder 9, wobei der Winkel (β) zwischen der vertikalen Achse (V) und der Brühkammerachse (CA) in der Brühposition im Bereich von 10° bis 90°, vorzugsweise im Bereich von 10° bis 50°, besonders bevorzugt im Bereich von 20° bis 40°, insbesondere bevorzugt bei etwa 30° liegt.

11. Getränkeausgabevorrichtung umfassend mindestens eine Brüheinheit (1) nach einem der vorhergehenden Ansprüche.

12. Verfahren zum Betreiben einer Brüheinheit (1) nach einem der Ansprüche 1 bis 10 zum Ausgeben eines Getränks, umfassend den Schritt des Ladens eines Bestandteils in die Brühkammer durch eine Öffnung (2a), wenn sich die Brühkammer in einer Ladeposition befindet, den Schritt des Betätigens von Antriebsmitteln (21, 22, 23, 24), um die Brühkammer aus der Ladeposition, in welcher sie von dem Verschließelement (3) nicht in Eingriff gebracht ist, in eine Brühposition, in welcher die Brühkammer (2) ein Verschließelement (3) eingreift, zu bewegen, und dem weiteren Schritt des Aktivierens der Antriebsmittel (21, 22, 23, 24), um die Brühkammer von der Brühposition in die Ladeposition zurückzubewegen, wobei während mindestens einem Teil der Bewegung der Brühkammer von der Brühposition in die Ladeposition Betätigungsmittel (40, 41) die Ladeposition die Position eines Kolbens (5) in Bezug auf die Brühkammer (2) modifizieren, um den erschöpften Bestandteil aus der Brühkammer auszuwerfen, indem die relative Position einer ersten Drehachse (30a) eines ersten Elementes (30), das an der Brühkammer (2) an der ersten Drehachse (30a) drehbar gezwungen ist, und einer zweiten Drehachse (31a) eines zweiten Elements (31), das drehbar an dem Kolben (5) an der zweiten Drehachse (31a) gezwungen ist, modifiziert wird.

13. Verfahren nach Anspruch 12, wobei die Brühkammer (2) zwischen einer Ladeposition und einer Brühposition bewegt wird, wobei in der Ladeposition die Brühkammerachse (CA) gegenüber einer vertikalen Achse (V) um einen Winkel (γ) geneigt ist, der im Bereich von 5° bis 20°, vorzugsweise im Bereich von 8° bis 16° und besonders bevorzugt bei etwa 12° liegt.

14. Brüheinheit (1) gemäß einem der Ansprüche 1 bis 10, wobei die Brühkammer (2) um eine Drehachse (10) drehbar ist, die außerhalb des Volumens der Brühkammer angeordnet ist, die dazu bestimmt ist, den Bestandteil aufzunehmen.

15. Brüheinheit nach Anspruch 14, wobei die Drehachse (10) der Brühkammer (2) unterhalb der durch die Bodenfläche (2b) der Brühkammer (2) definierten Ebene angeordnet ist.

16. Brüheinheit nach Anspruch 14 oder 15, wobei die Brühkammer (2) entlang einer Translationsachse (A) bewegbar ist, wobei die Drehachse (10) der Brühkammer (2) senkrecht zu der Translationsachse (A), entlang der sich die Brühkammer bewegt, ist oder senkrecht zu einer Achse parallel zur Translationsachse (A) ist.

17. Brüheinheit nach einem der Ansprüche 14 bis 16, wobei die Drehachse (10) der Brühkammer (2) senkrecht zu einer Brühkammerachse (CA) oder zu einer zur Brühkammerachse (CA) parallelen Achse ist.

18. Getränkeausgabevorrichtung umfassend mindestens eine Brüheinheit (1) nach einem der Ansprüche 14 bis 17.

## Revendications

1. Unité d'infusion (1) pour une machine de distribution de boisson comprenant une chambre d'infusion (2) et un élément de fermeture (3), dans laquelle la chambre d'infusion est mobile entre une position de chargement dans laquelle elle est désengagée de l'élément de fermeture (3) pour recevoir un ingrédient à travers une ouverture (2a) de la chambre d'infusion et une position d'infusion dans laquelle la chambre d'infusion (2) entre en prise avec l'élément de fermeture (3), des moyens d'entraînement (21, 22, 23, 24) pour déplacer la chambre d'infusion au moins de ladite position de chargement à ladite position d'infusion et de la position d'infusion à la position de chargement, un piston (5) ayant une portion de filtre (5a) agencée à l'intérieur de la chambre d'infusion (2) et une portion de tige (5b) faisant saillie à l'extérieur de ladite chambre d'infusion (2), ledit piston (5) étant mobile par rapport à ladite chambre d'infusion (2), ladite unité d'infusion comprenant en outre un premier élément (30) contraint de manière rotative à la chambre d'infusion (2) au niveau d'un premier axe de rotation (30a) et un deuxième élément (31) contraint au piston (5), lesdits premier et deuxième éléments (30, 31) étant contraints de manière rotative l'un à l'autre par une portion de liaison (35) au niveau d'un troisième axe de rotation (35), et **caractérisée en ce que** le deuxième élément (31) est contraint de manière rotative au piston (5) au niveau d'un deuxième axe de rotation (31a) et **en ce que** l'unité d'infusion (1) comprend en outre un moyen de fonctionnement (40, 41) pour modifier la position relative entre le premier axe de rotation (30a) et le deuxième axe de rotation (31a) et la position dudit piston (5) par rapport à ladite chambre d'infusion (2).

2. Unité d'infusion selon la revendication 1, comprenant un premier moyen de fonctionnement (41) agencé pour augmenter la distance (D) entre le premier axe de rotation (30a) et le deuxième axe de rotation (31a) et un deuxième moyen de fonctionnement (40) agencé pour diminuer la distance (D) entre le premier axe de rotation (30a) et le deuxième axe de rotation (31a).

3. Unité d'infusion selon la revendication 2, dans laquelle ledit premier moyen de fonctionnement (41) entre en prise avec la portion de liaison (35) entre le premier élément (30) et le deuxième élément (31) dans au moins une position de la chambre d'infusion (2) enter la position d'infusion et la position de chargement.

4. Unité d'infusion selon la revendication 2 ou 3, dans laquelle ledit premier moyen de fonctionnement (41) comprend au moins une surface de guidage (41) et dans ladite au moins une position entre la position d'infusion et la position de chargement la surface de guidage (41) entre en prise avec la portion de liaison (35) pour la guider vers ladite chambre d'infusion (2).

5. Unité d'infusion selon l'une quelconque des revendications 2 à 4, dans laquelle ledit deuxième moyen de fonctionnement (40) touche le piston (5), de préférence à une portion d'extrémité du piston (5) dans au moins une position de la chambre d'infusion (2) entre la position d'infusion et la position de chargement.

6. Unité d'infusion selon l'une quelconque des revendications 2 à 5, dans laquelle ledit deuxième moyen de fonctionnement (40) comprend au moins un levier (40) mobile entre au moins une position de fonctionnement dans laquelle le levier est incident sur le trajet de mouvement dudit piston (5) pendant au moins une partie du mouvement de la chambre d'infusion (2) de la position d'infusion à la position de chargement et au moins une position de non fonctionnement dans laquelle le levier n'est pas incident sur le trajet de mouvement du piston (5).

7. Unité d'infusion selon la revendication 6, dans laquelle ledit levier (40) comprend un moyen élastique (40a) sollicitant le levier (40) dans ladite au moins une position de fonctionnement.

8. Unité d'infusion selon l'une quelconque des revendications précédentes, dans laquelle la chambre d'infusion (2) a un axe de chambre d'infusion (CA), dans ladite position de chargement et dans ladite position d'infusion l'axe de chambre d'infusion (CA) étant incliné par rapport à un axe vertical (V) de l'unité de diffusion, l'inclinaison de l'axe de chambre d'infusion (CA) dans la position de chargement étant opposée à l'inclinaison de l'axe de chambre d'infusion (CA) dans la position d'infusion.

9. Unité d'infusion selon la revendication 8, dans laquelle l'angle (γ) entre l'axe vertical (V) et l'axe de chambre d'infusion (CA) dans ladite position de chargement est compris dans la plage 5°-20°, de préférence dans la plage 8°-16°, de manière davantage préférée d'environ 12°.

10. Unité d'infusion selon la revendication 8 ou 9, dans laquelle l'angle (β) entre l'axe vertical (V) et l'axe de chambre d'infusion (CA) dans la position d'infusion est compris dans la plage 10°-90°, de préférence dans la plage 10°-50°, de manière davantage préférée dans la plage 20°-40°, de la manière la plus préférée est d'environ 30°.

11. Machine de distribution de boisson comprenant au moins une unité d'infusion (1) selon l'une quelconque des revendications précédentes.

12. Procédé de fonctionnement d'une unité d'infusion (1) selon l'une quelconque des revendications 1 à 10 pour la distribution d'une boisson, comprenant l'étape de chargement d'un ingrédient dans ladite chambre d'infusion à travers une ouverture (2a) lorsque ladite chambre d'infusion est dans une position de chargement, l'étape d'actionnement d'un moyen d'entraînement (21, 22, 23, 24) pour déplacer la chambre d'infusion de ladite position de chargement dans laquelle elle est désengagée d'un élément de fermeture (3) à une position d'infusion dans laquelle la chambre d'infusion (2) entre en prise avec un élément de fermeture (3) et l'étape suivante d'activation dudit moyen d'entraînement (21, 22, 23, 24) pour faire revenir la chambre d'infusion de ladite position d'infusion à ladite position de chargement, dans lequel pendant au moins une partie du mouvement de la chambre d'infusion de la position d'infusion à la position de chargement, un moyen d'actionnement (40, 41) modifie la position d'un piston (5) par rapport à la chambre d'infusion (2) pour éjecter l'ingrédient évacué de la chambre d'infusion par modification de la position relative d'un premier axe de rotation (30a) d'un premier élément (30) contraint de manière rotative à la chambre d'infusion (2) au niveau dudit premier axe de rotation (30a) et d'un deuxième axe de rotation (31a) d'un deuxième élément (31) contraint de manière rotative au piston (5) au niveau dudit deuxième axe de rotation (31a).

13. Procédé selon la revendication 12, dans lequel la chambre d'infusion (2) est déplacée entre une position de chargement et une position d'infusion, dans lequel dans la position de chargement, l'axe de chambre d'infusion (CA) est incliné par rapport à un axe vertical (V) d'un angle (γ) compris dans la plage 5°-20°, de préférence dans la plage 8°-16°, de manière davantage préférée d'environ 12°.

14. Unité d'infusion (1) selon l'une quelconque des revendications 1 à 10, dans laquelle ladite chambre d'infusion (2) est rotative autour d'un axe de rotation (10) agencé à l'extérieur du volume de la chambre d'infusion destiné à loger l'ingrédient.

15. Unité d'infusion selon la revendication 14, dans laquelle ledit axe de rotation (10) de la chambre d'infusion (2) est agencé sous le plan défini par la surface inférieure (2b) de la chambre d'infusion (2).

16. Unité d'infusion selon la revendication 14 ou 15, dans laquelle ladite chambre d'infusion (2) est mobile le long d'un axe de translation (A), ledit axe de rotation (10) de la chambre d'infusion (2) étant perpendiculaire audit axe de translation (A) le long duquel la chambre d'infusion est translatée, ou perpendiculaire à un axe parallèle à l'axe de translation (A).

17. Unité d'infusion selon l'une quelconque des revendications 14 à 16, dans laquelle ledit axe de rotation (10) de la chambre d'infusion (2) est perpendiculaire à un axe de chambre d'infusion (CA), ou à un axe parallèle à l'axe de chambre d'infusion (CA).

18. Machine de distribution de boisson comprenant au moins une unité d'infusion (1) selon l'une quelconque des revendications 14 à 17.
